# FASCICULE DE BREVET EUROPEEN

(11) **EP 2 445 748 B1**
(45) Date de publication et mention de la délivrance du brevet: **15.05.2013**
(21) Numéro de dépôt: 10734292.5
(22) Date de dépôt: 21.06.2010
(51) Int. Cl.: B60N 2/015, F16B 21/07

(54) **DISPOSITIF DE SOLIDARISATION D'UNE ASSISE AU PLANCHER D'UN VÉHICULE**
BEFESTIGUNGSVORRICHTUNG EINES SITZTEILES AM FUSSBODEN EINES FAHRZEUGES
DEVICE FOR RIGIDLY CONNECTING A SEAT PORTION TO A VEHICLE FLOOR

(30) Priorité: 23.06.2009 FR 0954243
(43) Date de publication de la demande: 02.05.2012
(73) Titulaire: Peugeot Citroën Automobiles Société Anonyme, 78140 Vélizy Villacoublay (FR); ITW, 95250 Beauchamp (FR)
(72) Inventeur: GUIHARD, Gaëtan, F-35150 Chanteloup (FR); MARVOYER, Eric, F-91080 Courcouronnes (FR); DAVID, Eric, F-92290 Chatenay Malabry (FR); HUARD, Fabrice, F-22830 Plouasne (FR); LESECQ, Jean-Pierre, F-95240 Cormeilles en Parisis (FR)
(74) Mandataire: Ménès, Catherine
(86) Numéro de dépôt international: PCT/FR2010/051260
(87) Numéro de publication internationale: WO 2010/149922

(56) Documents cités:
- FR-A1- 2 906 766
- JP-A- 5 294 176
- US-A- 4 742 984
- US-A- 4 916 778
- US-A- 5 788 314

## Description

La présente invention concerne un dispositif de solidarisation d'une assise au plancher d'un véhicule, notamment un véhicule automobile (cf. par exemple FR-A-2 906 766, correspondant au préambule de la revendication indépendante 1).

Les véhicules automobiles sont généralement équipés d'une banquette arrière, destinée à accueillir les passagers. Cette banquette arrière comprend une assise et un dossier, qui est souvent rabattable pour agrandir l'espace disponible dans le coffre. Suivant les modèles de véhicules, l'assise de la banquette arrière peut être également rabattable, ou alors au contraire être montée fixement dans le véhicule. La présente invention concerne particulièrement les dispositifs de solidarisation d'une telle assise destinée à être montée fixement dans un véhicule.

Pour faciliter la solidarisation de l'assise de banquette arrière au plancher du véhicule, il a été proposé d'utiliser des verrous élastiques, ou clips. De tels verrous élastiques permettent un assemblage à force de deux pièces en déformant un ou plusieurs éléments qui, quand les deux pièces sont dans leur position d'assemblage, reviennent élastiquement dans une position dans laquelle ils verrouillent cet assemblage.

De tels verrous élastiques montés dans le plancher du véhicule permettent d'assurer facilement la solidarisation d'éléments de gâche liés à l'assise du siège. La solidarisation faite avec de tels verrous élastiques est irréversible. En conséquence, s'il est nécessaire de démonter l'assise de la banquette arrière, par exemple pour accéder à des équipements défaillants du véhicule comme un capteur de niveau du carburant, il est nécessaire d'arracher de force l'assise de la banquette arrière en détruisant les verrous élastiques, qui sont généralement fabriqués en matière plastique. Le remontage de l'assise nécessite donc alors la pose de nouveaux verrous élastiques du même modèle, ce qui impose au mécanicien effectuant ce remontage de disposer de tels verrous.

La présente invention a pour objectif de pallier ces inconvénients de l'art antérieur.

Plus précisément, la présente invention a pour objectif de fournir un dispositif de solidarisation d'une assise à un véhicule qui puisse être démonté facilement sans détérioration de ces éléments.

Un autre objectif de l'invention est de fournir un tel dispositif de solidarisation qui soit de fabrication aisée et qui permette un assemblage très facile de l'assise sur le véhicule.

Encore un autre objectif de l'invention est de fournir un tel dispositif de solidarisation qui offre une solidarisation de l'assise suffisamment solide pour que l'assise reste assemblée au véhicule en cas d'accident impactant celui-ci, et notamment en cas de choc arrière.

Encore un autre objectif de l'invention est de fournir un tel dispositif de solidarisation qui ne soit pas visible par l'utilisateur du véhicule.

Ces objectifs, ainsi que d'autres qui apparaîtront plus clairement par la suite, sont atteints à l'aide d'un dispositif de solidarisation d'une assise au plancher d'un véhicule, notamment automobile, comprenant un verrou dont le corps est assemblé au plancher et comporte une partie située au dessus du niveau du plancher et dans laquelle est ménagée une ouverture, et dont un pêne élastiquement mobile dans le corps du verrou est apte à verrouiller une gâche assemblée à l'assise, ladite partie du corps du verrou présentant la forme d'un cadre dont les parois font saillie du plancher, et ladite ouverture présentant la forme d'une encoche ménagée dans la paroi du cadre tournée vers l'avant du véhicule, caracterisé en ce que ladite ouverture est une ouverture de passage d'un outil permettant d'agir sur le pêne mobile pour déverrouiller la gâche et en ce que ledit pêne présente sur sa face tournée vers l'avant une zone d'appui sur laquelle l'outil peut agir pour déplacer le pêne d'une position de verrouillage à une position de déverrouillage.

De façon avantageuse, le corps du verrou est fixé par des clips de verrouillage dans un orifice conjugué réalisé dans le plancher du véhicule.

Préférentiellement, le corps du verrou présente un élément détrompeur permettant l'introduction du corps du verrou dans l'orifice dans une position unique.

Avantageusement, le verrou comporte des moyens de butée aptes à empêcher le déplacement de la gâche vers l'avant du véhicule.

Préférentiellement, le pêne mobile est lié à une paroi du corps du verrou par l'intermédiaire d'un élément de liaison formant charnière souple et permettant un pivotement du pêne autour d'un axe vertical.

De façon avantageuse, l'élément de liaison rappelle élastiquement le pêne vers sa position de verrouillage dans laquelle il permet le verrouillage de la gâche.

La présente invention concerne également un véhicule automobile comportant une assise verrouillée à son plancher par l'intermédiaire d'un dispositif de solidarisation tel que décrit ci-dessus.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue en perspective d'un plancher de véhicule sur lequel une assise de siège est sur le point d'être assemblée par des dispositifs de solidarisation selon un mode de réalisation de l'invention ;
- la figure 2 est une vue de détail d'un des dispositifs de solidarisation visible sur la figure 1 ; et
- les figures 3 à 5 sont des vues de détail du dispositif de solidarisation de la figure 2, montrant une gâche verrouillée dans un verrou élastique, respectivement en vue de perspective au-dessus du plancher, en vue de perspective en-dessous du plancher, et en vue de dessus. La figure 1 représente un plancher 1 d'un véhicule automobile, et une assise 2 de la banquette arrière de ce véhicule sur le point d'être assemblée au plancher 1. Cet assemblage doit se réaliser notamment par le biais de deux dispositifs de solidarisation identiques situés à droite et à gauche de l'assise.

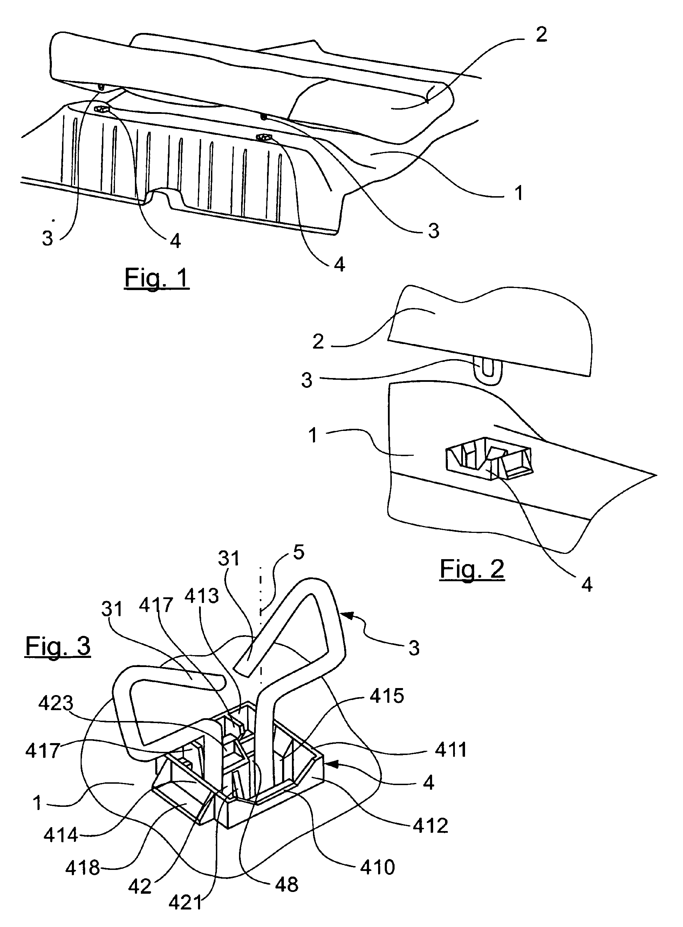

La figure 2 est une vue de détail de l'un de ces dispositifs de solidarisation montrant un verrou élastique 4 assemblé au plancher 1 du véhicule et une gâche 3 assemblée à l'assise 2. La solidarisation de l'assise 2 au plancher 1 se fait en introduisant en force la gâche 3 dans le verrou élastique 4. Quand la gâche 3 est suffisamment introduite, les éléments élastiquement mobiles du verrou élastique verrouillent sa position, ce qui solidarise l'assise 2 au plancher 1.

Les figures 3 à 5 montrent la gâche 3 verrouillée dans le verrou élastique 4, qui a été préalablement monté dans le plancher 1 du véhicule. Pour des raisons de clarté, l'assise 2 n'est pas représentée sur ces figures.

La gâche 3 est constituée par un fil métallique rigide dont les extrémités constituent des crochets 31 d'ancrage à l'assise et la partie centrale constitue une portion de verrouillage 32.

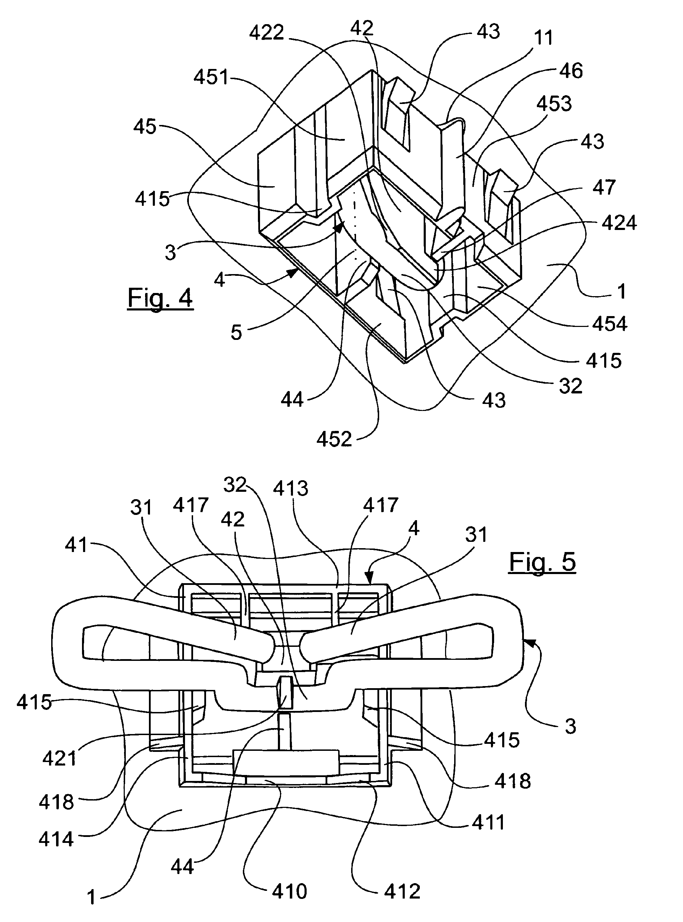

Le verrou élastique 4, qui est fabriqué en matériau plastique moulé, présente un corps de verrou constitué d'un cadre supérieur 41 et d'un cadre inférieur 45 solidaires l'un de l'autre. Le cadre inférieur 45, visible sur la figure 4, est constitué de quatre parois formant un rectangle. Il est destiné à être introduit dans un orifice, ou trou rectangulaire ménagé dans le plancher 1 du véhicule pour s'étendre en-dessous de ce plancher 1. Pour faciliter cette introduction, les bords inférieurs des parois de ce cadre présentent une forme de chanfrein.

Il est à noter que la paroi arrière 453 du cadre inférieur 45 présente sur sa face extérieure un élément détrompeur constitué par un ergot de détrompage 46 destiné à être introduit dans une encoche 11 présente sur un bord du trou rectangulaire ménagé dans le plancher 1 du véhicule pour introduire le verrou élastique 4. Ce verrou 4 ne peut être ainsi introduit dans le trou du plancher 1 du véhicule que dans une unique position correcte.

Le cadre supérieur 41, visible sur les figures 3 et 5, est constitué de quatre parois formant sensiblement un carré. Ce carré présente des dimensions plus importantes que la taille du trou ménagé dans le plancher. Le cadre supérieur 41 est destiné à être en appui sur la surface supérieure du plancher 1. En particulier, les parois avant 412 et arrière 413 de ce cadre supérieur 41, ainsi que des butées 418 placées sur les bords des parois latérales 411 et 414, sont en appui sur la surface supérieure du plancher 1, au bord du trou rectangulaire.

Il est à noter que les parois latérales 411 et 414 du cadre supérieur 41 sont dans la continuité des parois latérales respectivement 451 et 454 du cadre inférieur 45. En particulier, ces parois latérales présentent un renfoncement 415 vers l'intérieur, s'étendant depuis le haut de chaque paroi latérale du cadre supérieur 41 jusqu'au bas de la paroi latérales correspondante du cadre inférieur 45. Ces renfoncements 415, qui sont chanfreinés à leur extrémité supérieure pour ne pas gêner l'introduction de la gâche 3 dans le verrou 4, ont pour fonction de limiter le déplacement de cette gâche 3 dans les directions latérales.

La position du verrou élastique 4 par rapport au plancher 1 est verrouillée par des clips de de verrouillage, ou clips élastiques d'ancrage 43 intégrés dans les parois avant 452 et arrière 453 du cadre inférieur 45. Ces clips 43 prennent appui, dans leur position de verrouillage, sur la surface inférieure du plancher 1. Le verrou élastique 4 peut ainsi être très facilement monté en force dans le trou du plancher, les clips d'ancrage 43 étant repoussés puis reprenant élastiquement leur position de verrouillage quand le verrou élastique 4 est en position.

Un pêne 42 s'étend dans le corps du verrou sensiblement dans un plan perpendiculaire à la direction. Ce pêne 42 est lié à la paroi latérales 451 du cadre inférieur 45 par l'intermédiaire d'un élément de liaison 48 formant charnière souple et calibrée de façon à ce que le pêne 42 puisse pivoter autour d'un axe vertical 5 par rapport au corps du verrou quand il est repoussé vers la paroi arrière 413, et revenir élastiquement dans sa position d'origine quand il est relâché.

Le cadre supérieur 41 présente des butées 417 solidaires de sa paroi arrière et s'étendant de part et d'autre de la surface supérieure du pêne 42. Ces butées 417 permettent d'empêcher que la gâche 3, lors de son introduction dans le verrou 4, n'exercent une pression dirigée vers le bas sur haut du pêne 42.

Quand la portion de verrouillage 32 de la gâche 3 est introduite dans le verrou élastique 4, elle s'introduit entre une rampe avant 44 solidaire de la paroi avant 452 du cadre inférieur 45 et une rampe de pêne 421 faisant partie du pêne 42. La rampe de pêne 421 présente une surface oblique par rapport à la verticale, son extrémité inférieure étant plus proche de la paroi avant 452 que son extrémité supérieure. L'introduction de la portion de verrouillage 32 de la gâche 3 entraine donc un appui de cette portion contre la rampe de pêne 421, ayant pour effet de repousser le pêne 42, en le faisant pivoter autour de l'axe 5 grâce à une déformation élastique de l'élément de liaison 48, de façon à laisser le passage à la portion de verrouillage 32.

Quand la portion de verrouillage 32 de la gâche 3 arrive en dessous de l'extrémité inférieure 422 du pêne 42, celui-ci revient élastiquement dans sa position de verrouillage représentée sur les figures 3 à 5. La portion de verrouillage 32 est alors en appui contre l'extrémité inférieure 422 du pêne 42 qui est conformée de façon à empêcher son déplacement vers le haut, ce qui verrouille la gâche 3 dans le verrou élastique 4.

Il est à noter que l'extrémité inférieure 422 du pêne 42 est équipée d'une languette 424, visible sur la figure 4, s'étendant sur le côté du pêne 42 opposé à la l'élément de liaison 48. Lorsque le pêne 42 est dans sa position de verrouillage, cette languette 424 se trouve placée sous le bord inférieur d'une butée 47 solidaire de la paroi arrière 453. Elle participe ainsi à empêcher le déplacement du pêne 42 vers le haut, et à éviter l'arrachage du pêne 3 hors du verrou 4.

Dans sa position verrouillée, la portion de verrouillage 32 est en contact avec la rampe avant 44 qui empêche son déplacement vers l'avant du véhicule. Cette rampe avant est dimensionnée de façon à pouvoir maintenir la portion de verrouillage 32 même en cas de choc tendant à entrainer l'assise vers l'avant du véhicule. Le verrouillage de la gâche 3 dans le verrou élastique 4 permet ainsi d'assurer une fixation de qualité de l'assise à la structure du véhicule automobile afin de résister aux efforts dus à un choc et d'éviter la désolidarisation du siège par rapport à la structure.

La paroi avant 412 du cadre supérieur 41 du verrou élastique 4, située au-dessus du plancher 1 du véhicule, présente une encoche 410. Cette encoche 410 permet l'introduction d'un outil tel qu'un tournevis dans le cadre supérieur 41 du verrou élastique 4, dans une direction sensiblement horizontale. Cette introduction peut être faite quand l'assise 2 est solidarisée au plancher 1, en glissant l'outil entre l'assise 2 et le plancher 1.

Cet outil peut être ainsi poussé jusqu'à appuyer sur le pêne 42. Cet appui peut être fait, de façon préférentielle, sur une surface d'appui 423 tourné vers l'avant du véhicule prévue au dessus de la rampe de pêne 421. L'outil peut ainsi agir sur le pêne 422 en le repoussant vers l'arrière, et en le faisant pivoter autour de l'axe 5 par déformation élastique de l'élément de liaison 48, ce qui l'éloigne de la rampe avant 44. Ce déplacement du pêne 42 permet de dégager la portion de verrouillage 32 de la gâche 3 et ainsi de déverrouiller celle-ci et de permettre son retrait du verrou 4.

Ce dispositif de déverrouillage du verrou élastique 4 est particulièrement aisé à mettre en oeuvre. En particulier, il ne nécessite aucune pièce supplémentaire par rapport à un verrou élastique non déverrouillable. Le verrou peut ainsi être mono-matière, ce qui facilite sa fabrication par moulage.

Ce dispositif de déverrouillage permet un démontage facile de l'assise 2 de la banquette arrière du véhicule, sans entraîner la destruction d'aucun des éléments du dispositif de verrouillage. Après ce démontage, il est donc encore possible de remonter l'assise 2 sur la plancher 1 du véhicule en introduisant les gâches 3 qui lui sont associées dans les mêmes verrous élastiques 4.

Par ailleurs, quand l'assise 2 est en position d'utilisation et solidarisée au plancher d'un véhicule, le verrou élastique 4 n'est pas visible par l'utilisateur du véhicule. En effet, le déverrouillage de ces verrous élastiques 4 en introduisant un outil dans l'encoche 410 ne doit être fait que par un garagiste ou un concessionnaire dans un but de maintenance du véhicule.

Il est à noter que de façon avantageuse, la forme du plancher 1 du véhicule et la forme ou la position du verrou élastique 4 sont prévues de telle sorte que le montage de l'assise 2 n'est possible que dans une position unique. Les erreurs sont ainsi rendues impossibles lors du montage.

## Revendications

1. Dispositif de solidarisation d'une assise (2) au plancher (1) d'un véhicule, notamment automobile, comprenant un verrou (4) dont le corps est assemblé au plancher (1) et comporte une partie située au-dessus du niveau du plancher (1) et dans laquelle est ménagée une ouverture, et dont un pêne (42) élastiquement mobile dans le corps du verrou est apte à verrouiller une gâche (3) assemblée à l'assise (2), ladite partie de corps du verrou présentant la forme d'un cadre (41) dont les parois font saillie du plancher (1), et ladite ouverture présentant la forme d'une encoche (410) ménagée dans la paroi (412) du cadre tournée vers l'avant du véhicule,
**caractérisé en ce que** ladite ouverture est une ouverture de passage d'un outil permettant d'agir sur le pêne mobile (42) pour déverrouiller la gâche (3) et **en ce que** ledit pêne (42) présente sur sa face tournée vers l'avant une zone d'appui (423) sur laquelle l'outil peut agir pour déplacer le pêne (42) d'une position de verrouillage à une position de déverrouillage

2. Dispositif de solidarisation selon la revendication 1, **caractérisé en ce que** le corps du verrou est fixé par des clips de verrouillage (43) dans un orifice conjugué réalisé dans le plancher (1) du véhicule.

3. Dispositif de solidarisation selon la revendication 2, **caractérisé en ce que** le corps du verrou présente un élément détrompeur (46) permettant l'introduction du corps du verrou dans l'orifice dans une position unique.

4. Dispositif de solidarisation selon l'une quelconque des revendications 1 à 3, **caractérisé en ce que** le verrou (4) comporte des moyens de butée (44) aptes à empêcher le déplacement de la gâche (3) vers l'avant du véhicule.

5. Dispositif de solidarisation selon l'une quelconque des revendications 1 à 4, **caractérisé en ce que** le pêne (42) est lié à une paroi du corps du verrou par l'intermédiaire d'un élément de liaison (48) formant charnière souple et permettant un pivotement du pêne (42) autour d'un axe vertical.

6. Dispositif de solidarisation selon la revendication 5, **caractérisé en ce que** ledit élément de liaison (48) rappelle élastiquement le pêne (42) vers sa position de verrouillage dans laquelle il permet le verrouillage de la gâche (3).

7. Véhicule automobile **caractérisé en ce qu'**il comporte une assise (2) verrouillée à son plancher (1) par l'intermédiaire d'un dispositif de solidarisation selon l'une quelconque des revendications 1 à 6.

## Patentansprüche

1. Vorrichtung zum Befestigen einer Sitzfläche (2) auf dem Fußboden (1) eines Fahrzeugs, insbesondere eines Kraftfahrzeugs, die einen Riegel (4) aufweist, dessen Körper mit dem Fußboden (1) zusammengebaut ist und einen Teil aufweist, der sich oberhalb des Niveaus des Fußbodens (1) befindet und in dem eine Öffnung eingerichtet ist, und von dem eine Raste (42), die in dem Körper des Riegels elastisch beweglich ist, einen Schließhaken (3), der mit der Sitzfläche (2) zusammengefügt ist, verriegeln kann, wobei der Körperteil des Riegels die Form eines Rahmens (41) aufweist, dessen Wände von dem Fußboden (1) vorstehen, und wobei die Öffnung die Form einer Kerbe (410) aufweist, die in der Wand (412) des Rahmens, der zu der Vorderseite des Fahrzeugs gerichtet ist, eingerichtet ist,
**dadurch gekennzeichnet, dass** die Öffnung eine Durchgangsöffnung eines Werkzeugs ist, das es erlaubt, auf den Riegel (42) einzuwirken, um den Schließhaken (3) zu entriegeln, und dass die Raste (42) auf ihrer zu der Vorderseite gerichteten Seite einen Auflagebereich (423) aufweist, auf den das Werkzeug einwirken kann, um den Riegel (42) von einer Verriegelungsposition zu einer Entriegelungsposition zu verlagern.

2. Vorrichtung zum Befestigen nach Anspruch 1, **dadurch gekennzeichnet, dass** der Körper des Riegels durch Verriegelungsclips (43) in einer zugeordneten Öffnung, die in dem Fußboden (1) des Fahrzeugs hergestellt ist, befestigt ist.

3. Vorrichtung zum Befestigen nach Anspruch 2, **dadurch gekennzeichnet, dass** der Körper des Riegels ein Unverwechselbarkeitselement (46) aufweist, das das Einführen des Körpers des Riegels in die Öffnung in einer einzigen Position erlaubt.

4. Vorrichtung zum Befestigen nach einem der Ansprüche 1 bis 3, **dadurch gekennzeichnet, dass** der Riegel (4) Anschlagmittel (44) aufweist, die geeignet sind, um das Verlagern des Schließhakens (3) zur Vorderseite des Fahrzeugs zu verhindern.

5. Vorrichtung zum Befestigen nach einem der Ansprüche 1 bis 4, **dadurch gekennzeichnet, dass** die Raste (42) mit einer Wand des Körpers des Riegels über ein Verbindungselement (48) verbunden ist, das ein biegsames Scharnier bildet und ein Schwenken der Raste (42) um eine vertikale Achse erlaubt.

6. Vorrichtung zum Befestigen nach Anspruch 5, **dadurch gekennzeichnet, dass** das Verbindungselement (48) die Raste (42) elastisch zu ihrer Verriegelungsposition zurückholt, in der sie das Verriegeln des Schließhakens (3) erlaubt.

7. Kraftfahrzeug, **dadurch gekennzeichnet, dass** es eine Sitzfläche (2) aufweist, die auf seinem Boden (1) über eine Vorrichtung zum Befestigen nach einem der Ansprüche 1 bis 6 verriegelt ist.

## Claims

1. A device for rigidly connecting a seat portion (2) to the floor (1) of a vehicle, in particular a motor vehicle, including a lock (4), the body of which is mounted on the floor (1) and comprises a portion that is located above the level of the floor (1) and in which an opening is arranged, and wherein a resiliently mobile latch (42) in the body of the lock is capable of locking a striker (3) that is mounted on the seat portion (2), the said body part of the lock having the shape of a frame (41), the walls of which project from the floor (1), and the said opening having the form of a slot (410) arranged in the wall (412) of the frame, turned towards the front of the vehicle,
**characterized in that** the said opening is an opening for the passage of a tool permitting action on the mobile latch (42) to unlock the striker (3) and **in that** the said latch (42) has, on its face turned towards the front, a support area (423) on which the tool can act to move the latch (42) from a locking position to an unlocking position.

2. The device for rigid connection according to Claim 1, **characterized in that** the body of the lock is fixed by locking clips (43) in a conjugate orifice formed in the floor (1) of the vehicle.

3. The device for rigid connection according to Claim 2, **characterized in that** the body of the lock has a foolproof element (46) permitting the introduction of the body of the lock in the orifice in a unique position.

4. The device for rigid connection according to any one of Claims 1 to 3, **characterized in that** the lock (4) comprises stop means (44) capable of preventing the movement of the striker (3) towards the front of the vehicle.

5. The device for rigid connection according to any one of Claims 1 to 4, **characterized in that** the latch (42) is connected to a wall of the body of the lock by means of a connecting element (48) forming a flexible hinge and permitting a pivoting of the latch (42) about a vertical axis.

6. The device for rigid connection according to Claim 5, **characterized in that** the said connecting element (48) returns the latch (42) elastically towards its locking position in which it permits the locking of the striker (3).

7. A motor vehicle **characterized in that** it comprises a seat portion (2) locked to its floor (1) by means of a device for rigid connection according to any one of Claims 1 to 6.
